# FASCICULE DE BREVET EUROPEEN

(11) **EP 2 527 191 B1**
(45) Date de publication et mention de la délivrance du brevet: **19.10.2016**
(21) Numéro de dépôt: 12168694.3
(22) Date de dépôt: 21.05.2012
(51) Int. Cl.: B60N 2/015

(54) **Système d'ancrage de siège sur plancher**
Verankerungssystem zum Verankern eines Sitzes am Boden
Anchoring system for anchoring a seat to the floor

(30) Priorité: 27.05.2011 FR 1154657
(43) Date de publication de la demande: 28.11.2012
(73) Titulaire: BV PRODUCTIONS, 62420 Billy Montigny (FR)
(72) Inventeur: Bels, Guillaume, 59000 LILLE (FR)
(74) Mandataire: Balesta, Pierre

(56) Documents cités:
- EP-A1- 1 790 521
- EP-A2- 2 253 500
- US-A- 3 392 954
- US-A- 4 114 947

## Description

La présente invention concerne un ensemble constitué d'un système d'ancrage et d'un rail, l'invention portant plus particulièrement sur le système d'ancrage. Un tel ensemble constitué d'un système d'ancrage et d'un rail est en particulier utilisé dans les véhicules pour la fixation des sièges du véhicule vis-à-vis du plancher du véhicule. Pour cela, l'invention porte également sur un véhicule équipé d'un ou de plusieurs ensembles objets de l'invention. On pourra toutefois envisager l'utilisation de tels ensembles, objets de l'invention, pour toute autre application nécessitant de fixer un premier objet vis-à-vis d'un second objet, le système d'ancrage étant assujetti à l'un des deux objets et le rail à l'autre des deux objets.

Il est déjà connu des ensembles constitués d'un système d'ancrage et d'un rail trouvant tout particulièrement leur application dans les véhicules, le système d'ancrage étant fixé à un châssis de support d'un siège et le rail étant fixé sur le plancher du véhicule. De tels ensembles sont par exemple décrits dans les documents EP 1 892 142 B1, EP 2 142 428 B1, EP 1 790 521 B1, EP 2 206 623 A1 et EP 2 253 500 A2.

Parmi ces documents, le document EP 2 253 500 A2 divulgue un système d'ancrage sur un rail, consistant en un perfectionnement du système d'ancrage sur un rail divulgué dans le document EP 1 790 521 B1. Ce système d'ancrage comprend un support fixé à un châssis de siège et des tenons alignés entre eux et répartis aux deux extrémités longitudinales du support, ces tenons étant fixes vis-à-vis du support et comportant chacun un corps et une tête configurés pour former un T inversé sous le support. En outre, le rail comprend un côté supérieur et un fond, fixé vis-à-vis du plancher de véhicule. Le côté supérieur comporte une rainure longitudinale configurée pour recevoir à coulissement les corps des tenons et pour empêcher le passage des têtes des tenons et, des ouvertures de passage entrecoupant à intervalle régulier ladite rainure longitudinale et configurées pour permettre l'insertion des têtes des tenons au travers desdites ouvertures de passage sur le rail puis le coulissement des corps des tenons dans ladite rainure longitudinale, empêchant le retrait des tenons vis-à-vis du rail. Un tel rail est plus couramment connu sous le nom de rail aviation. En outre, le système d'ancrage, selon le document EP 2 253 500 A2, comprend un plot mobile configuré pour passer au travers de l'ouverture de passage et rester en butée au travers de la rainure longitudinale et, un tenon mobile de conception similaire au tenon fixe, disposé sous le support. Le système d'ancrage comprend également un dispositif d'actionnement du plot et du tenon mobile, ce dispositif d'actionnement étant configuré pour concomitamment déplacer le plot dans une position escamotée sur le support et le tenon mobile dans une position inactive selon laquelle la tête du tenon mobile est dégagée vers le bas vis-à-vis d'une face inférieure du côté supérieur du rail, permettant le coulissement des corps des tenons fixes et du corps du tenon mobile dans la rainure longitudinale, en sorte de déplacer le support le long du rail longitudinal et de pouvoir effectuer son dégagement vis-à-vis dudit rail. Inversement, le dispositif d'actionnement est configuré pour déplacer le plot dans une position active selon laquelle ledit plot est engagé dans une des ouvertures de passage et bloque le coulissement des corps des tenons fixes et du corps du tenon mobile le long de la rainure longitudinale et, concomitamment, pour déplacer le tenon mobile dans une position active selon laquelle la tête du tenon mobile remonte et exerce une pression sur la face inférieure du côté supérieur du rail, ce qui permet d'ancrer le support du système d'ancrage sur le rail. En effet, la pression de contact exercée par la tête du tenon mobile sur la face inférieure du côté supérieure du rail permet de plaquer le support contre la face supérieure du côté supérieur du rail et ainsi, d'immobiliser convenablement le support vis-à-vis du rail lors de la mise en place du système d'ancrage. Ce système d'ancrage présente pour avantage, au moyen d'une seule poignée de manipulation, d'actionner concomitamment le plot et le tenon mobile.

Le document EP 2 142 428 B1 divulgue un système d'ancrage comportant un dispositif d'actionnement présentant des caractéristiques similaires et fonctionnant sur le même principe que celui décrit dans le document EP 2 253 500 A2, à la différence que ce dispositif d'actionnement comprend deux systèmes de manipulation individuels commandant chacun, respectivement, le plot et le tenon mobile.

Le document US 4 114 947 décrit un système d'ancrage selon le préambule de la revendication 1.

L'objet de la présente invention est de mettre en oeuvre une alternative de conception de système d'ancrage facilitant sa manipulation et dont la conception est simplifiée par rapport au système d'ancrage tel que ceux décrits dans l'art antérieur.

A cet effet, l'invention porte sur un ensemble constitué d'un système d'ancrage et d'un rail. De manière connue, le système d'ancrage comprend un support et au moins deux tenons, les tenons étant alignés entre eux et fixes sur le support, ces tenons comportant chacun un corps et une tête configurés pour former un T inversé sous le support. De même, le rail, plus connu sous le nom de rail aviation, comprend un côté supérieur et un fond, le côté supérieur comportant une rainure longitudinale configurée pour recevoir à coulissement les corps des tenons et pour empêcher le passage des têtes des tenons et, au moins deux ouvertures de passage entrecoupant ladite rainure longitudinale et configurée pour permettre l'insertion des têtes des tenons dans le rail, puis le coulissement des corps des tenons dans la rainure longitudinale, en sorte de positionner les têtes des tenons en-dessous de la rainure longitudinale et d'empêcher le dégagement des tenons engagés dans ladite rainure longitudinale et ainsi, d'empêcher le dégagement du support vis-à-vis du rail. Selon l'invention, le système d'ancrage comprend un plot mobile et configuré pour passer au travers de l'ouverture de passage et pour rester en butée contre la rainure longitudinale une fois engagé dans cette ouverture de passage. En outre, le système d'ancrage comprend un dispositif d'actionnement du plot configuré pour déplacer le plot dans une position escamotée sur le support, autorisant le coulissement des corps des tenons dans la rainure longitudinale et inversement, pour déplacer le plot dans une position active selon laquelle le plot est engagé dans une des ouvertures de passage, bloquant le coulissement des corps des tenons dans la rainure longitudinale. Dans cette position active, ces plots exercent en outre une poussée vers le bas, contre le fond du rail, permettant de soulever le support et de rehausser les tenons engagés dans la rainure longitudinale et ainsi, de plaquer les têtes des tenons contre une face inférieure du côté supérieur du rail, en sorte d'immobiliser convenablement le support vis-à-vis du rail. La conception du système d'ancrage, selon l'invention, permet ainsi de s'affranchir de la présence d'un tenon mobile en réalisant le blocage du système d'ancrage vis-à-vis du rail directement au moyen du plot mobile et des tenons fixes sur le support.

De manière préférentielle, il est prévu d'actionner un seul plot prenant appui sur le fond du rail en sorte de rehausser les tenons et de les plaquer sur la face inférieure du côté supérieur du rail. On peut toutefois envisager un dispositif d'actionnement actionnant concomitamment plusieurs plots prenant appui sur le fond du rail lors de l'activation dudit dispositif d'actionnement, en sorte de répartir, par exemple, les points d'appui et les efforts lorsque les têtes des tenons sont plaquées contre la face inférieure du côté supérieur du rail, assurant l'ancrage du système d'ancrage vis-à-vis du rail.

Selon l'invention, le dispositif d'actionnement comprend des moyens de rappel du plot configurés pour insérer automatiquement le plot dans une ouverture de passage lorsque ledit plot et l'ouverture de passage coïncident. Cela permet de bloquer automatiquement le coulissement du système d'ancrage vis-à-vis du rail lorsque le plot coïncide avec une ouverture de passage sur le rail et évite, par conséquent, de mettre en place le système d'ancrage par tâtonnements, c'est-à-dire en actionnant progressivement et à plusieurs reprises le dispositif d'actionnement du plot pour rechercher la position selon laquelle ledit plot et une ouverture de passage coïncident.

Selon l'invention, le dispositif d'actionnement comprend une poignée de manipulation et un mécanisme de transmission agencé entre ladite poignée de manipulation et le plot en sorte que l'actionnement de la poignée de manipulation permet une translation du plot de sa position escamotée à sa position active, et inversement.

De manière avantageuse, le plot est monté en liaison à glissière sur le support selon un axe vertical, la poignée de manipulation est montée en liaison pivot sur le support selon un premier axe de pivotement horizontal et perpendiculaire à l'axe vertical et une bielle est montée en liaison pivot, d'une part, avec la poignée de manipulation selon un second axe de pivotement horizontal, parallèle et décalé sur un premier côté de l'axe vertical et vers le bas par rapport au premier axe de pivotement et, d'autre part, avec le plot selon un troisième axe de pivotement horizontal, perpendiculaire à l'axe vertical, parallèle au premier axe de pivotement et décalé vers le bas par rapport au second axe de pivotement.

Avantageusement, le plot entre en butée contre le fond du rail lorsque la poignée de manipulation est actionnée vers le bas et que le second axe de pivotement est légèrement décalé sur le premier côté par rapport à l'axe vertical.

De préférence, des moyens de butée sont agencés entre la poignée de manipulation et le support pour bloquer le pivotement de la poignée de manipulation lors d'un basculement du second axe de pivotement du premier côté vers un second côté de l'axe vertical.

Selon d'invention, la poignée de manipulation comporte une semelle configurée pour permettre l'actionnement de ladite poignée de manipulation avec un pied, ce qui évite à l'utilisateur de devoir se baisser pour manipuler la poignée de manipulation avec la main.

De préférence, le dispositif d'actionnement s'étend et dépasse de l'arrière du fauteuil grâce à quoi un utilisateur peut sans aide extérieure facilement déplacer le fauteuil en appuyant avec son pied sur la semelle tout en poussant ou tirant le dossier du fauteuil.

Avantageusement, le dispositif d'actionnement comprend un mécanisme de sécurité permettant de bloquer le plot dans sa position active selon laquelle ledit plot est en appui et exerce une pression contre le fond du rail et les têtes des tenons sont plaquées contre la face inférieure du côté supérieur. Cela permet de maintenir convenablement ancré le système d'ancrage vis-à-vis du rail.

De manière préférentielle, le mécanisme de transmission et le mécanisme de sécurité sont mis en oeuvre au moyen d'un mécanisme à genouillère, de type sauterelle équipé d'une tige de poussée dont l'extrémité est assujettie au plot. On peut toutefois envisager la mise en oeuvre d'un mécanisme de transmission et d'un mécanisme de sécurité indépendants l'un de l'autre, sans sortir du cadre de l'invention.

Selon un mode de réalisation de l'invention, le plot comprend un corps principal configuré pour être inséré dans une ouverture de passage et venir en butée contre la rainure longitudinale et, un téton agencé à une extrémité inférieure du corps principal est configuré pour coulisser dans la rainure longitudinale. Cette conception préférentielle du plot présente pour avantage de nécessiter uniquement l'escamotage du corps principal sur le support en sorte de permettre le coulissement des tenons et du téton vis-à-vis de la rainure longitudinale. Cela permet de limiter la course du mécanisme d'actionnement du plot et ainsi, de limiter l'amplitude de manoeuvre de la poignée de manipulation.

L'invention concerne également un véhicule comportant un plancher, au moins un siège et au moins un ensemble constitué d'un système d'ancrage et d'un rail objet de la présente invention. Ledit ensemble est agencé entre le plancher et le siège, le rail étant fixé sur le plancher et le système d'ancrage étant fixé sur le siège.

Les caractéristiques et avantages de la présente invention apparaîtront à la lecture de la description suivante d'un mode préférentiel de conception s'appuyant sur des figures parmi lesquelles :
- la figure 1 illustre une vue en plan d'un ensemble selon l'invention, constitué d'un système d'ancrage et d'un rail, le système d'ancrage étant dans une position escamotée ;
- la figure 2 illustre une vue en plan de l'ensemble selon l'invention, dans une position intermédiaire selon laquelle le système d'ancrage prend appui sur le rail et s'apprête à exercer une poussée vers le bas, contre le fond du rail, en sorte de rehausser les tenons et le support vis-à-vis du rail ;
- la figure 3 illustre une vue en plan de l'ensemble selon l'invention dans une position selon laquelle le système d'ancrage est activé, ledit système d'ancrage exerçant une poussée contre le fond du rail et rehaussant les tenons pour plaquer les têtes des tenons contre la face inférieure du côté supérieur du rail ;
- la figure 4 illustre une vue d'un rail selon un mode de réalisation ;
- la figure 5 illustre une vue d'ensemble du système d'ancrage agencé à l'extrémité d'un châssis support d'un siège pour son agencement dans un véhicule ;
- Les figures 6 à 7 illustrent respectivement une vue de côté et une vue de face du châssis et du système d'ancrage assujetti à l'extrémité inférieure du châssis, tel qu'illustré sur la figure 5.

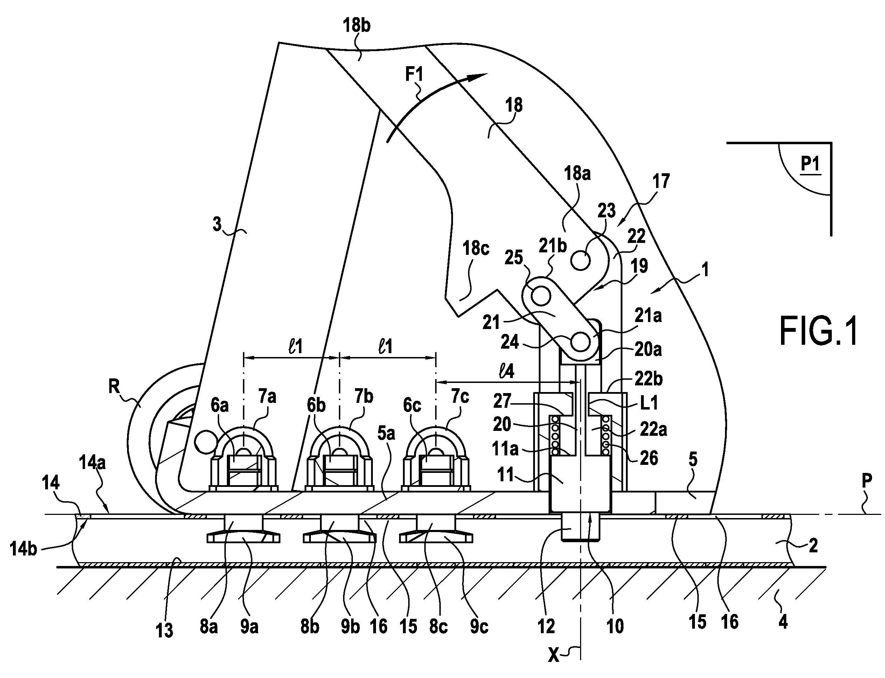

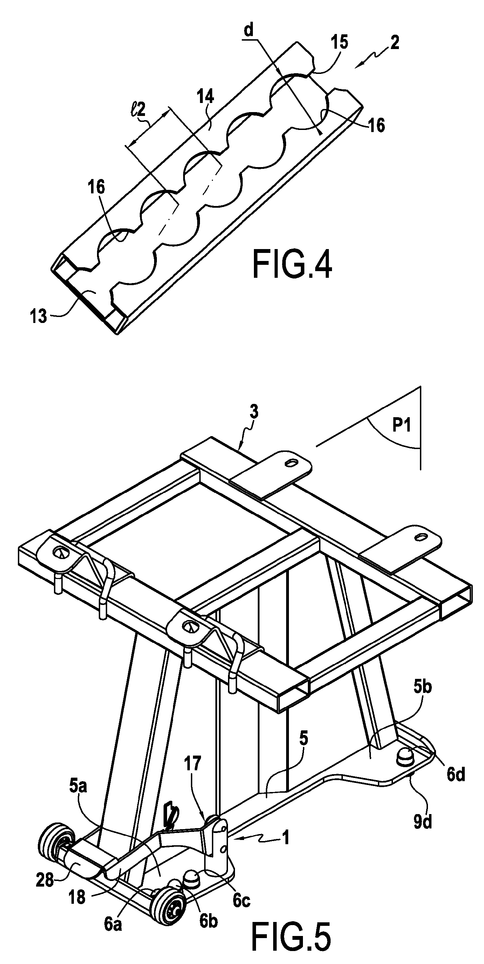

Sur les figures 1 à 3 sont illustrés un système d'ancrage 1 coopérant avec un rail 2 en vue de permettre un ancrage entre un premier objet et un second objet. Dans une application préférentielle, cet ensemble constitué du système d'ancrage 1 et du rail 2 est mis en oeuvre dans un véhicule, le premier objet consistant en un châssis 3 et le second objet consistant en un plancher de véhicule 4. Un mode de mise en oeuvre du châssis 3 est illustré sur les figures 5 à 7, le système d'ancrage 1 comprenant un support 5 qui est fixé en partie inférieure de ce châssis 3, ce châssis 3 étant destiné à recevoir un siège de véhicule. En outre, le rail 2 est de préférence fixé vis-à-vis du plancher de véhicule 4 dans le sens de la longueur.

Le système d'ancrage 1 comprend des tenons 6a, 6b, 6c, 6d illustrés en détail sur les figures 1 à 3 et 5 à 7. On constate au regard de ces figures 1 à 3 et 5 à 7 que le système d'ancrage comprend de préférence trois tenons 6a, 6b, 6c agencés à une première extrémité longitudinale 5a du support 5 et un quatrième tenon 6d agencé à une seconde extrémité longitudinale 5b du support 5. Ces tenons 6a, 6b, 6c, 6d sont fixés sur le support 5 et s'étendent de préférence perpendiculairement par rapport à un plan P de ce support 5, illustré en figures 1 à 3. Durant son utilisation, le plan P du support 5 est défini horizontalement ; on comprend donc que ces tenons 6a, 6b, 6c, 6d s'étendent dans une position plus ou moins verticale telle qu'illustrée sur les figures 1 à 3. Ces tenons 6a, 6b, 6c, 6d sont fixés sur le support 5 grâce à des moyens de boulonnage 7a, 7b, 7c, 7d voire grâce à des moyens de goupillage ou toute autre variante de moyen de fixation.

On constate sur les figures 1 à 3 et 5 à 7 que les tenons 6a, 6b, 6c, 6d comportent chacun un corps 8a, 8b, 8c, 8d et une tête 9a, 9b, 9c, 9d. De préférence, les tenons 6a, 6b, 6c, 6d sont tous de conception et de dimension identiques et présentent la forme d'un T inversé.

On constate sur les figures 1 à 3, 6 et 7 que le système d'ancrage 1 comprend un plot 10. Ce plot 10 est mobile vis-à-vis du support 5 au travers duquel ledit plot 10 coulisse selon un axe X perpendiculaire au plan P dudit support 5. On comprend donc qu'en mode d'utilisation, ce plot 10 translate verticalement selon l'axe X. On constate sur les figures 1 à 3, 6 et 7 que le plot 10 comprend un corps principal 11 et un téton 12. Cette conception est un mode préférentiel visant à limiter la course du plot 10 durant sa translation selon l'axe X. On pourrait toutefois envisager un plot 10 constitué uniquement d'un corps principal 11, selon d'autres variantes de réalisation.

On constate en regard des figures 1 à 4 que le rail 2 comprend un fond 13 et un côté supérieur 14 qui comprend une face supérieure 14a et une face inférieure 14b. Le rail 2 comprend une rainure 15 longitudinale agencée sur le côté supérieur 14, ainsi qu'une pluralité d'ouvertures de passage 16 qui entrecoupent à intervalles réguliers la rainure 15. Ce rail 2 est plus couramment connu sous le nom de rail aviation. La rainure 15 comprend une largeur ℓ et les ouvertures de passages 16 sont de forme cylindrique et comprennent un diamètre d, tel qu'illustré sur la figure 4. Les tenons 6a, 6b, 6c, 6d sont de préférence de forme cylindrique. Les corps 8a, 8b, 8c, 8d des tenons 6a, 6b, 6c, 6d comprennent de préférence un diamètre d1 de dimension légèrement inférieure à la largeur ℓ de la rainure 15, ce qui permet le coulissement des corps 8a, 8b, 8c, 8d des tenons 9a, 9b, 9c, 9d le long de la rainure 15.

En outre, les têtes 9a, 9b, 9c, 9d des tenons 6a, 6b, 6c, 6d comprennent un diamètre d2 qui est supérieur à la largeur ℓ de la rainure 15 et inférieur au diamètre d des ouvertures de passage 16, ce qui permet le passage des têtes 9a, 9b, 9c, 9d des tenons 6a, 6b, 6c, 6d au travers des ouvertures de passage 16 sur le rail et inversement, empêche le passage des dites têtes 9a, 9b, 9c, 9d au travers de la rainure longitudinale 15.

De même, le plot 10 est de forme cylindrique, le corps 11 comprenant un diamètre d3 qui est supérieur à la largeur ℓ de la rainure 15 et légèrement inférieur au diamètre d des ouvertures de passage 16, ce qui permet le passage du corps 11 du plot 10 au travers des ouvertures de passage 16 sur le rail 2 et empêche au contraire le coulissement dudit corps 11 le long de la rainure 15.

De même, le téton 12 comprend un diamètre d4 qui est légèrement inférieur à la largeur ℓ de la rainure 15, ce qui permet le coulissement du téton 12 le long de la rainure 15.

La translation du plot selon l'axe longitudinal X est mise en oeuvre au moyen du dispositif d'actionnement 17 illustré sur les figures 1 à 3 et 5. Ce dispositif d'actionnement 17 comprend une poignée de manipulation 18. De même, ce dispositif d'actionnement 17 comprend un mécanisme de transmission 19 illustré en détail sur les figures 1 à 3. De préférence, ce mécanisme de transmission 19 est mis en oeuvre au moyen d'un mécanisme à genouillère, de type sauterelle équipé d'une tige de poussée 20 qui s'étend le long de l'axe X et est assujettie au plot 10, tel qu'illustré sur les figures 1 à 3. Ce mécanisme à genouillère est mis en oeuvre au moyen de l'extrémité 18a de la poignée de manipulation 18, d'une bielle 21, de la tige de poussée 20 assujettie au plot 10 et d'une pièce de support 22, tel qu'illustré sur les figures 1 à 3. La pièce du support 22 est fixée sur le dessus du support 5. On peut envisager que cette pièce de support 22 soit rapportée sur le support 5 ou au contraire prévoir que cette pièce de support 22 soit une partie intégrante dudit support 5. L'extrémité 18a de la poignée de manipulation 18 est montée en liaison pivot vis-à-vis de la pièce de support 22 selon un axe de pivotement 23 qui est perpendiculaire à l'axe X, le long duquel coulisse le plot 10 et la tige de poussée 20 assujettie au dit plot 10. De préférence, cet axe de pivotement 23 est disposé perpendiculairement par rapport à un plan longitudinal P1 illustré sur les figures 1 à 3 et 5 à 7. La bielle 21 est montée, à sa première extrémité 21a, en liaison pivot vis-à-vis de l'extrémité supérieure 20a de la tige de poussée 20 selon un axe de pivotement 24 qui s'étend perpendiculairement à l'axe X et perpendiculairement au plan P1. Cet axe de pivotement 24 est disposé en-dessous de l'axe de pivotement 23 de la poignée de manipulation 18. En outre, la bielle 21 est montée à sa seconde extrémité 21b, en liaison pivot par rapport à l'extrémité 18a de la poignée de manipulation 18, selon un axe de pivotement 25 qui est disposé perpendiculairement au plan P1. On constate également sur les figures 1 à 3 que la tige de poussée 20 est montée en liaison glissière L1, ou en liaison pivot glissante, vis-à-vis de la pièce de support 22, permettant sa translation selon l'axe X.

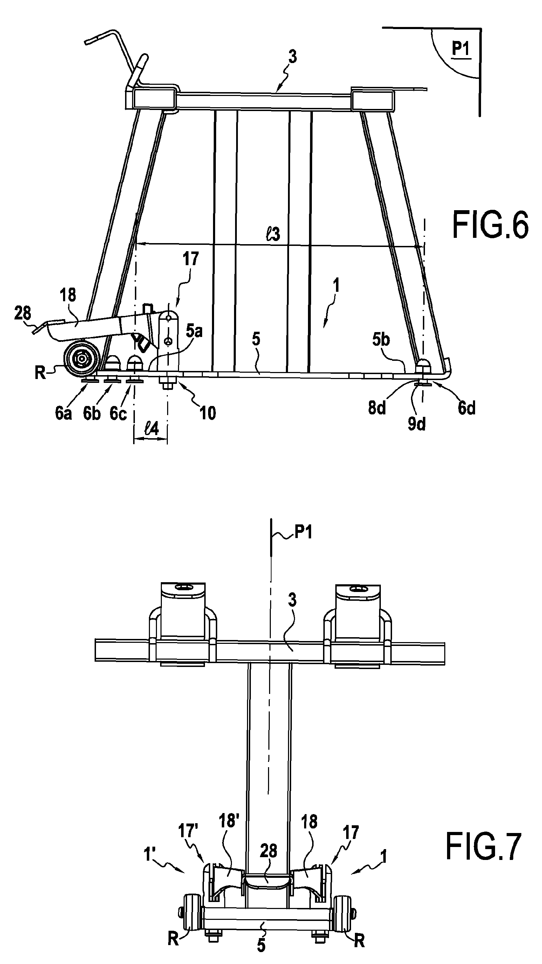

Les tenons 6a, 6b, 6c sont espacés entre eux d'une distance ℓ1 illustrée sur les figures 1 à 3, égale à la distance ℓ2 séparant entre elles les ouvertures de passage 16 sur le rail 2, tel qu'illustré sur la figure 4. On comprend de même que la distance ℓ3 séparant le tenon 6c du tenon 6d, telle qu'illustrée sur la figure 6, est égal à un multiple N de la longueur ℓ2 séparant deux ouvertures de passage 16 sur le rail 2, telle qu'illustrée sur la figure 4, où N est un nombre entier. En outre, la distance ℓ4 séparant le tenon 6c, du plot 10, telle qu'illustrée sur les figures 1 à 3, est dimensionnée en sorte d'être décalée d'un demi-pas par rapport à un multiple N1 de la longueur ℓ1 ou ℓ2, N1 étant un nombre entier.

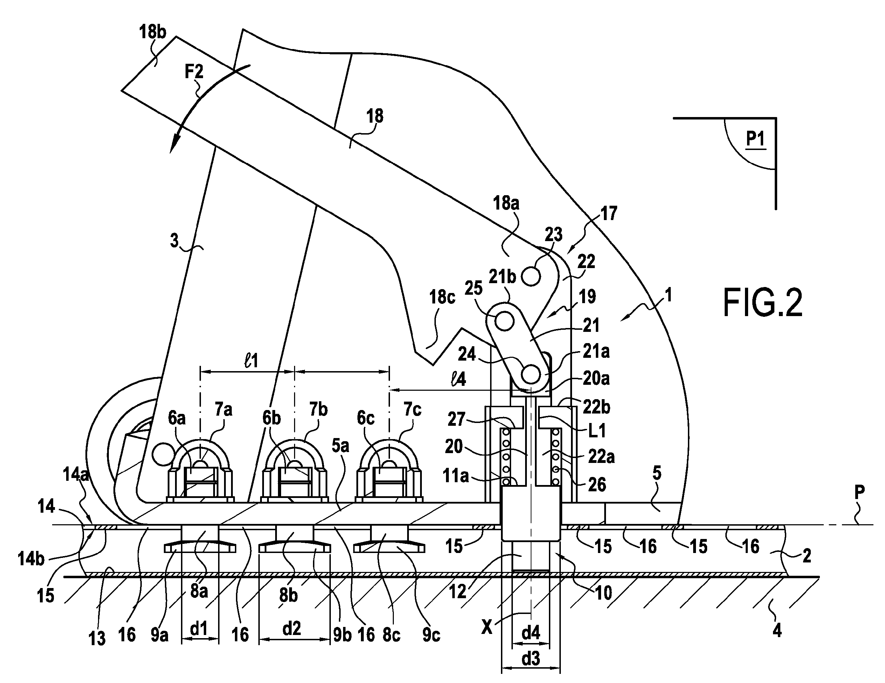

La mise en place du système d'ancrage 1 sur le rail 2 s'effectue de la manière suivante : la poignée de manipulation 18 est actionnée vers le haut dans le sens de la flèche F1, illustrée sur la figure 1, ce qui permet de positionner le plot 10 dans une position escamotée selon laquelle le corps 11 est escamoté à l'intérieur du support 5, seul le téton 12 dépassant en-dessous du support 5, tel qu'illustré sur la figure 1. Les tenons 6a, 6b, 6c, 6d du système de fixation 1, disposés sous le support 5 peuvent alors être insérés au travers des ouvertures de passage 16 sur le côté supérieur 14 du rail 2. On comprend que le téton 12 ayant un diamètre d4 inférieur à la largeur ℓ de la rainure longitudinale 15, et que dans cette position de la figure 1, le téton 12 étant décalé d'un demi pas par rapport aux ouvertures de passage 16, celui-ci peut pénétrer au travers de la rainure 15. On constate que dans cette position, le support 5 est en appui contre la face supérieure 14a du côté supérieur 14 du rail 2 tandis que les têtes 8a, 8b, 8c des tenons 6a, 6b, 6c, de même que la tête 9d du tenon 6d, sont disposées au niveau des ouvertures de passage 16, en-dessous de la face inférieure 14b du côté supérieur 14 du rail 2. Cette position permet donc ensuite de coulisser le support 5 et les tenons 6a, 6b, 6c, 6d le long de la rainure 15 en sorte de décaler d'un demi pas ledit support et de positionner les corps 8a, 8b, 8c, 8d des tenons au niveau de la rainure longitudinale 15, permettant concomitamment de placer les têtes 9a, 9b, 9c, 9d en-dessous de ladite rainure 15. Cette position est illustrée sur la figure 2.

Le corps 11 du plot 10 coulisse selon l'axe X dans une chambre 22a agencée sur la pièce de support 22, tel qu'illustré sur les figures 1 à 3. On constate que le dispositif d'actionnement 17 comprend des moyens de rappel constitués ici par un ressort 26 monté en compression à l'intérieur de la chambre 22a sur la pièce de support 22, entre le fond 27 de cette chambre 22a et le côté supérieur 11a du corps 11. Cela permet d'exercer une poussée vers le bas sur le corps 11. Cette conception facilite l'introduction du corps 11 dans une ouverture de passage 16 sur le rail, lorsque le système d'ancrage 1 se trouve en position tel qu'illustré sur la figure 2. En effet, lors du passage du système d'ancrage 1 de la figure 1 à la figure 2, le corps 11 du plot 10 reste initialement en butée contre la face supérieure 14a du côté supérieur 14 du rail 2 tandis que le téton 12 du plot est disposé dans la rainure 15 et coulisse dans cette rainure 15 ; lorsque le plot 10 est disposé en vis-à-vis de l'ouverture de passage 16, c'est-à-dire que le plot 10 et l'ouverture de passage 16 coïncident, la pression exercée par le ressort 26 sur le côté supérieur 11a du corps 11 permet de pousser automatiquement celui-ci au travers de l'orifice de passage 16 en sorte d'engager ledit corps 11 au travers dudit orifice de passage 16 jusqu'à ce que le téton 12 vienne en butée contre le fond 13 du rail 2, tel qu'illustré sur la figure 2. On comprend à la lecture des figures 1 à 3 que le ressort 26 force concomitamment le pivotement vers le bas de la poignée de manipulation 18 dans le sens de la flèche F2, jusqu'à ce que le téton 12 soit en butée contre le fond 13 du rail 2. Dans cette position illustrée en figure 2, le corps 11 vient en butée contre la rainure 15, ce qui empêche le coulissement des corps 8a, 8b, 8c, 8d des tenons 6a, 6b, 6c, 6d le long de ladite rainure 15. Dans cette position illustrée à la figure 2, le support 5 est toujours au contact de la face supérieure 14a du côté supérieur 14 du rail. Dans cette position illustrée en figure 2, l'axe de pivotement 25 entre la bielle 21 et la poignée de manipulation 18 est légèrement décalé vers l'avant par rapport à l'axe X.

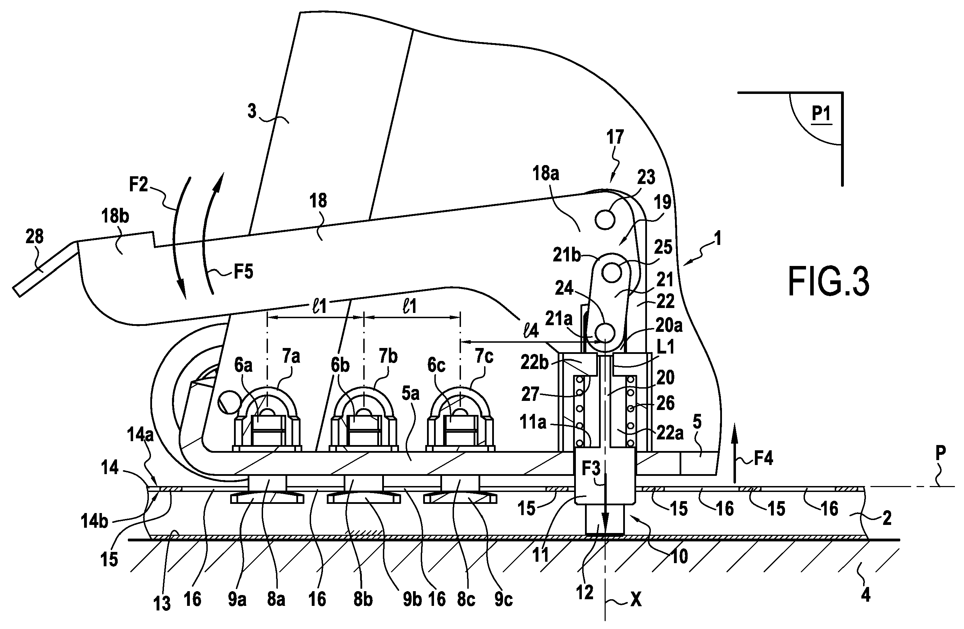

Le passage de la position illustrée en figure 2 vers la position illustrée en figure 3 est effectué en pivotant vers le bas la poignée de manipulation 18, dans le sens de la flèche F2. Cette manipulation de la poignée de manipulation 18 peut être réalisée avec une main ou avec un pied. On constate sur les figures 1 à 3 que la poignée de manipulation 18 comprend à sa seconde extrémité 18b une semelle 28 permettant, de préférence, la manipulation avec le pied. L'effort exercé sur la poignée de manipulation 18 dans le sens de la flèche F2 permet à l'extrémité 12a du téton 12 du plot 10 d'exercer une poussée vers le bas sur le fond 13 du rail 2, dans le sens de la flèche F3. Cette poussée du téton 12 contre le fond 13 du rail permet inversement de soulever le support 5 et de rehausser celui-ci dans le sens de la flèche F4, inverse au sens de la flèche F3. Cela permet de rehausser les têtes 9a, 9b, 9c, 9d des tenons 6a, 6b, 6c, 6d qui viennent en contact contre la face inférieure 14b du côté supérieur 14 du rail 2 et exerce une pression contre celle-ci, permettant de bloquer le support du système de fixation 1 vis-à-vis du rail 2. Cela permet avantageusement de supprimer le jeu existant entre les têtes et le rail.

L'utilisation d'un mécanisme de transmission 19 de type sauterelle à tige de poussée, tel que précisé précédemment, présente en outre pour avantage de sécuriser le verrouillage du système d'ancrage 1 vis-à-vis du rail 2. En effet, on constate qu'avant le passage du système d'ancrage 1 en position active, l'axe de pivotement 25 du mécanisme de transmission 19 est positionné d'un premier côté de l'axe X passant par les axes de pivotement 23 et 24. Lors de la manipulation de la poignée de manipulation 18 dans le sens de la flèche F2, il est nécessaire de forcer le pivotement de la poignée de manipulation 18 dans le sens de la flèche F2 une fois que les têtes 9a, 9b, 9c, 9d des tenons 6a, 6b, 6c, 6d entrent en contact avec la face inférieure 14b du côté supérieur 14 du rail 2. Le forçage de ce pivotement permet de contraindre le mécanisme de transmission 19 en sorte de faire pivoter et basculer l'axe de pivotement 25 de l'autre côté de l'axe X tel qu'illustré sur la figure 3. Le basculement de l'axe de pivotement 25 de l'autre côté de l'axe X tend ensuite à favoriser le pivotement de la poignée de manipulation 18 dans le sens de la flèche F2, ce qui aurait pour inconvénient de réduire la pression exercée par le téton 12 sur le fond 13 du rail 2. Pour éviter cette diminution de la pression, la poignée de manipulation 18 comprend une première partie épaulée 18c qui vient en contact sur une seconde partie épaulée 22b de la pièce de support 22, bloquant au-delà de cette limite, le pivotement de la poignée de manipulation 18 selon l'axe de pivotement 23. La poignée de manipulation 18 reste donc bloquée dans cette position illustrée en figure 3 selon laquelle le système d'ancrage 1 est activé, le mécanisme de transmission 19 constitué d'une sauterelle à tige de poussée empêchant toute désactivation du système d'ancrage 1 qui reste convenablement fixé vis-à-vis du rail 2.

La désactivation du système d'ancrage 1 s'effectue en exerçant un effort sur la poignée de manipulation 18 dans un sens opposé à celui de la flèche F2, c'est-à-dire dans le sens de la flèche F5, notamment en exerçant cet effort avec un pied sur la semelle 28. Le support 5 du système de fixation 1 redescend alors naturellement sous l'effet de son poids et de celui du châssis 3, de la position illustrée à la figure 3 vers la position illustrée à la figure 2. Il est ensuite possible de manipuler à nouveau la poignée de manipulation 18 dans le sens de la flèche F5 ou F1 en sorte de soulever celle-ci jusqu'à atteindre la position illustrée à la figure 1 et ainsi, d'escamoter le corps 11, ce qui permet de dégager le système de fixation 1 vis-à-vis du rail.

On constate au regard des figures 5 à 7 que le châssis 3 comprend deux systèmes d'ancrage 1, 1' agencés chacun d'un côté latéral et de manière symétrique par rapport au plan longitudinal P1 de symétrie dudit châssis 3, les systèmes d'ancrage 1 et 1' sont de préférence de conception similaire.

On constate en outre que les poignées de manipulation 18, 18' des deux systèmes d'ancrage 1, 1' sont connectées entre elles au moyen d'une seule semelle 28 permettant d'agir concomitamment sur les deux poignées de manipulation 18, 18' et donc d'actionner concomitamment les deux systèmes d'ancrage 1, 1' lors de la manipulation avec le pied sans avoir à se baisser ou éventuellement avec la main. Grâce à l'invention, le fauteuil peut être facilement et rapidement déverrouillé par un seul opérateur, sans aide extérieure, en une seule opération consistant à lever la semelle par exemple avec le pied. L'opérateur peut ensuite facilement déplacer le fauteuil en le poussant ou le tirant. En outre, le moyen de rappel permet de verrouiller automatiquement le fauteuil après que l'opérateur a retiré son pied de la semelle.

On comprend par conséquent que deux rails 2 de conception similaire à celui illustré en figure 4 sont fixés sur le plancher du véhicule avec un écartement correspondant à celui des deux systèmes d'ancrage 17, 17', en sorte de permettre la réception respective des dits systèmes d'ancrage 17, 17' et de permettre la fixation du châssis sur le plancher du véhicule.

Bien entendu, des variantes sont envisageables et on pourrait envisager la mise en oeuvre d'un seul système d'ancrage 1 sur le châssis 3, lequel serait de préférence disposé dans le plan P1 de symétrie du châssis 3.

Des variantes sont envisageables également quant à la mise en oeuvre du système d'ancrage 1. On pourrait éventuellement envisager la mise en oeuvre de plusieurs plots 10 de conception similaire actionnés de préférence au moyen d'une seule poignée de manipulation 18, le système d'ancrage 1 comprenant autant de mécanismes de transmission 19 que de plots 10.

On peut également envisager des variantes de conception du mécanisme de transmission 19 et des moyens de rappel du plot 10 permettant d'insérer automatiquement ledit plot au travers de l'ouverture de passage 16 lorsque ceux-ci coïncident.

On peut également envisager des variantes de conception du mécanisme de sécurité permettant de maintenir bloqué le plot dans sa position active, en fonction de la conception du mécanisme de transmission. On pourrait par exemple envisager un blocage direct, au moyen d'une butée de blocage, de la poignée de manipulation 18 lorsque le plot 10 est disposé en position active.

On peut également modifier le nombre de tenons présents sur le système de fixation 1. On pourrait par exemple prévoir uniquement deux tenons disposés chacun d'un côté du plot 10 sur le support 5.

Le plot 10 peut en outre être conçu simplement au moyen du corps 11, c'est-à-dire que l'on peut supprimer le téton 12. Dans ce cas, le corps 11 viendrait directement au contact sur le fond 13 du rail 2. Cette conception nécessiterait toutefois d'augmenter la course de translation du corps 11 selon l'axe X pour le passer de la position escamotée sur le support à la position active, en contact sur le fond 13 du rail 2.

On peut également prévoir des variantes de formes des tenons 6a, 6b, 6c, 6d et des plots 10 en fonction de la forme des orifices de passage 16 sur le rail 2.

Des variantes de formes peuvent aussi être envisagées pour le support 5 et pour le rail 2, en fonction de la forme du châssis 3 et du plancher 4 dans le véhicule.

En se référant à la figure 7, on constate que la partie arrière du support 5 comprend une paire de roues permettant de faciliter le déplacement du fauteuil après l'avoir fait légèrement basculer. Ce basculement peut être facilement effectué en tirant vers soi le dossier tout en relevant la semelle 28 afin de faire pivoter la poignée selon le sens F1.

## Revendications

1. Ensemble constitué d'un premier système d'ancrage (1) et d'un rail (2), le premier système d'ancrage (1) comprenant un support (5) et au moins deux tenons (6a, 6b, 6c, 6d), les tenons étant alignés entre eux et fixes sur le support et comportant chacun un corps (8a, 8b, 8c, 8d) et une tête (9a, 9b, 9c, 9d) configurés pour former un T inversé sous le support, le rail (2) comprenant un côté supérieur (14) et un fond (13), le côté supérieur (14) comportant une rainure (15) longitudinale configurée pour recevoir à coulissement les corps et pour empêcher le passage (16) des têtes et, au moins deux ouvertures de passage entrecoupant ladite rainure et configurées pour permettre l'insertion des têtes dans le rail puis le coulissement des corps dans ladite rainure, ledit premier système d'ancrage (1) comprenant au moins un plot (10) mobile et configuré pour passer au travers d'une ouverture de passage (16) et rester en butée contre la rainure (15) et, un dispositif d'actionnement (17) du plot configuré pour déplacer le plot (10) dans une position escamotée sur le support (5) autorisant le coulissement des corps dans la rainure ou, inversement, dans une position active selon laquelle le plot est engagé dans une des ouvertures de passage (16) et exerce une poussée contre le fond (13) du rail permettant de rehausser les tenons (6a, 6b, 6c, 6d) engagés dans la rainure (15) et de plaquer les têtes (9a, 9b, 9c, 9d) contre une face inférieure (14b) du côté supérieur (14), **caractérisé en ce que** le dispositif d'actionnement (17) comprend en outre des moyens de rappel (26) du plot (10) configurés pour insérer automatiquement le plot dans une ouverture de passage (16) lorsque le plot et l'ouverture de passage coïncident, **en ce que** le dispositif d'actionnement (17) comprend une première poignée de manipulation (18) et un mécanisme de transmission (19) agencé entre la première poignée de manipulation et le plot (10) en sorte que l'actionnement de la première poignée de manipulation permet une translation du plot de sa position escamotée à sa position active, et inversement, **en ce que** la première poignée de manipulation (18) comporte une semelle (28) configurée pour permettre l'actionnement de ladite première poignée de manipulation avec un pied, **en ce que** ledit ensemble comporte un second système d'ancrage (1) muni d'une seconde poignée de manipulation (18), et **en ce que** les première et seconde poignées de manipulation (18, 18') sont reliées entre elles à l'arrière du fauteuil par la semelle (28), laquelle permet d'agir concomitamment sur les première et seconde poignées de manipulation.

2. Ensemble selon la revendication 1, **caractérisé en ce que** les moyens de rappel comportent un ressort (26) monté en compression à l'intérieur d'une chambre ménagée dans une pièce de support (22) fixée au support.

3. Ensemble selon la revendication 2, **caractérisé en ce que** la première poignée de manipulation est montée pivotante à la pièce de support (22).

4. Ensemble (1, 2) selon l'une quelconque des revendications 1 à 3, dans lequel le plot (10) est monté en liaison à glissière (L1) sur le support (5) selon un axe vertical (X), la première poignée de manipulation (18) est montée en liaison pivot sur le support selon un premier axe de pivotement (23) horizontal et perpendiculaire à l'axe vertical (X) et, une bielle est montée en liaison pivot, d'une part, avec la première poignée de manipulation (18) selon un second axe de pivotement (25) horizontal, parallèle et décalé sur un premier côté de l'axe vertical (X) et vers le bas par rapport au premier axe de pivotement (23) et, d'autre part, avec le plot (10) selon un troisième axe de pivotement (24) horizontal, perpendiculaire à l'axe vertical (X), parallèle au premier axe de pivotement (23) et décalé vers le bas par rapport au second axe de pivotement (25).

5. Ensemble (1, 2) selon la revendication 4, dans lequel le plot (10) entre en butée contre le fond (13) du rail (2) lorsque la première poignée de manipulation (18) est actionnée vers le bas et que le second axe de pivotement (25) est légèrement décalé sur le premier côté par rapport à l'axe vertical (X).

6. Ensemble (1, 2) selon la revendication 5, dans lequel des moyens de butée (18c, 22b) sont agencés entre la première poignée de manipulation (18) et le support (5) pour bloquer le pivotement de ladite première poignée de manipulation lors d'un basculement du second axe de pivotement (25) du premier côté vers un second côté de l'axe vertical (X).

7. Ensemble (1, 2) selon l'une quelconque des revendications 1 à 6, dans lequel le dispositif d'actionnement (17) comprend un mécanisme de sécurité permettant de bloquer le plot (10) dans sa position active.

8. Ensemble (1, 2) selon l'une quelconque des revendications 1 à 7, dans lequel le plot (10) comprend un corps principal (11) configuré pour être inséré dans une ouverture de passage (16) et venir en butée contre la rainure (15) et, un téton (12) agencé à une extrémité inférieure du corps principal (11) et configuré pour coulisser dans la rainure (15).

9. Véhicule comportant un plancher (4) et au moins un siège, au moins un ensemble selon l'une quelconque des revendications 1 à 8, étant agencé entre le plancher (4) et le siège, le rail (2) étant fixé sur le plancher (4) et les premier et second systèmes d'ancrage (1) étant fixés au siège, par le biais d'un châssis (3).

## Patentansprüche

1. Einheit, bestehend aus einem ersten Verankerungssystem (1) und einer Schiene (2), wobei das erste Verankerungssystem (1) einen Träger (5) und mindestens zwei Zapfen (6a, 6b, 6c, 6d) umfasst, wobei die Zapfen untereinander ausgerichtet und auf dem Träger befestigt sind, und jeweils einen Körper (8a, 8b, 8c, 8d) und einen Kopf (9a, 9b, 9c, 9d) umfassen, die dazu vorgesehen sind, ein umgekehrtes T unter dem Träger zu bilden, wobei die Schiene (2) eine Oberseite (14) und einen Boden (13) umfasst, wobei die Oberseite (14) eine Längsnut (15) umfasst, die dazu vorgesehen ist, die Körper gleitend aufzunehmen und den Durchgang (16) der Köpfe zu verhindern, und wobei mindestens zwei Durchgangsöffnungen die Nut durchschneiden und dazu vorgesehen sind, das Einsetzen der Köpfe in die Schiene, dann das Gleiten der Körper in der Nut zu ermöglichen, wobei das erste Verankerungssystem (1) mindestens ein bewegliches Stück (10), das dazu vorgesehen ist, durch eine Durchgangsöffnung (16) hindurchzugehen und an der Nut (15) am Anschlag zu bleiben, und eine Vorrichtung zur Betätigung (17) des Stücks umfasst, die dazu vorgesehen ist, das Stück (10) in eine eingezogene Position auf dem Träger (5), die das Gleiten der Körper in der Nut gestattet, oder umgekehrt in eine aktive Position zu bringen, in der das Stück in einer der Durchgangsöffnungen (16) in Eingriff ist und einen Schub gegen den Boden (13) der Schiene ausübt, der es ermöglicht, die Zapfen (6a, 6b, 6c, 6d), die in der Nut (15) in Eingriff sind, anzuheben, und die Köpfe (9a, 9b, 9c, 9d) gegen die Innenseite (14b) der Oberseite (14) zu drücken, **dadurch gekennzeichnet, dass** die Betätigungsvorrichtung (17) ferner Mittel (26) zur Rückstellung des Stücks (10) umfasst, die dazu vorgesehen sind, das Stück automatisch in eine Durchgangsöffnung (16) einzusetzen, wenn das Stück und die Durchgangsöffnung zusammenfallen, dass die Betätigungsvorrichtung (17) einen ersten Betätigungsgriff (18) und einen Übertragungsmechanismus (19) umfasst, der zwischen dem ersten Betätigungsgriff und dem Stück (10) angeordnet ist, so dass die Betätigung des ersten Betätigungsgriffes eine Translation des Stücks von seiner eingezogenen Position in seine aktive Position ermöglicht und umgekehrt, dass der erste Betätigungsgriff (18) eine Sohle (28) umfasst, die dazu vorgesehen ist, die Betätigung des ersten Betätigungsgriffes mit einem Fuß zu ermöglichen, dass die Einheit ein zweites Verankerungssystem (1) umfasst, das mit einem zweiten Betätigungsgriff (18) versehen ist, und dass die ersten und zweiten Betätigungsgriffe (18, 18') miteinander hinter dem Sitz durch die Sohle (28) verbunden sind, die es ermöglicht, auf die ersten und zweiten Betätigungsgriffe gemeinsam einzuwirken.

2. Einheit nach Anspruch 1, **dadurch gekennzeichnet, dass** die Rückstellmittel eine Feder (26) umfassen, die komprimiert im Inneren einer Kammer montiert ist, die in einem am Träger befestigten Auflagestück (22) ausgenommen ist.

3. Einheit nach Anspruch 2, **dadurch gekennzeichnet, dass** der erste Betätigungsgriff schwenkbar am Auflagestück (22) montiert ist.

4. Einheit (1, 2) nach einem der Ansprüche 1 bis 3, bei der das Stück (10) in Gleitschienenverbindung (L1) auf dem Träger (5) entlang einer Vertikalachse (X) montiert ist, der erste Betätigungsgriff (18) in Schwenkverbindung auf dem Träger entlang einer ersten horizontalen und auf die Vertikalachse (X) vertikalen Schwenkachse (23) montiert ist, und eine Zugstange in Schwenkverbindung einerseits mit dem ersten Betätigungsgriff (18) entlang einer zweiten horizontalen, parallelen und auf einer ersten Seite der Vertikalachse (X) und nach unten zur ersten Schwenkachse (23) versetzten Schwenkachse (25) und andererseits mit dem Stück (10) entlang einer dritten horizontalen, auf die Vertikalachse (X) senkrechten, zu ersten Schwenkachse (23) parallelen und nach unten zur zweiten Schwenkachse (24) versetzten Schwenkachse (25) montiert ist.

5. Einheit (1, 2) nach Anspruch 4, bei der das Stück (10) am Boden (13) der Schiene (2) zum Anschlag gelangt, wenn der erste Betätigungsgriff (18) nach unten betätigt wird und die zweite Schwenkachse (25) leicht auf der ersten Seite zur Vertikalachse (X) versetzt ist.

6. Einheit (1, 2) nach Anspruch 5, bei der Anschlagmittel (18c, 22b) zwischen dem ersten Betätigungsgriff (18) und dem Träger (5) angeordnet sind, um das Schenken des ersten Betätigungsgriffes bei einem Kuppen der zweiten Schwenkachse (25) von der ersten Seite zu einer zweiten Seite der Vertikalachse (X) zu blockieren.

7. Einheit (1, 2) nach einem der Ansprüche 1 bis 6, bei der die Betätigungsvorrichtung (17) einen Sicherheitsmechanismus umfasst, der es ermöglicht, das Stück (10) in seiner aktiven Position zu blockieren.

8. Einheit (1, 2) nach einem der Ansprüche 1 bis 7, bei der das Stück (10) einen Hauptkörper (11), der dazu vorgesehen ist, in eine Durchgangsöffnung (16) eingesetzt zu werden und an der Nut (15) zum Anschlag zu gelangen, und einen Zapfen (12) umfasst, der an einem unteren Ende des Hauptkörpers (11) angeordnet und dazu vorgesehen ist, in der Nut (15) zu gleiten.

9. Fahrzeug, umfassend einen Boden (4) und mindestens einen Sitz, wobei mindestens eine Einheit nach einem der Ansprüche 1 bis 8 zwischen dem Boden (4) und dem Sitz angeordnet ist, wobei die Schiene (2) auf dem Boden (4) befestigt ist, und die ersten und zweiten Verankerungssysteme (1) am Sitz mit Hilfe eines Gestells (3) befestigt sind.

## Claims

1. An assembly consisting of a first anchoring system (1) and of a rail (2), the first anchoring system (1) comprising a support (5) and at least two tenons (6a, 6b, 6c, 6d), the tenons being aligned with each other and fixed on the support and each including a body (8a, 8b, 8c, 8d) and a head (9a, 9b, 9c, 9d) configured so as to form an inverted T under the support, the rail (2) comprising an upper side (14) and a bottom (13), the upper side (14) including a longitudinal groove (15) configured for slidably receiving the bodies and for preventing the passage (16) of the heads and, at least two passage apertures intersecting said groove and configured for allowing insertion of the heads in the rail and then the sliding of the bodies in said groove, said first anchoring system (1) comprising at least one mobile stud (10) and configured for passing through a passage aperture (16) and remaining in abutment against the groove (15) and, an actuation device (17) of the stud configured for moving the stud (10) into a retracted position on the support (5) allowing the sliding of the bodies in the groove or vice versa in an active position according to which the stud is engaged into one of the passage apertures (16) and exerts a thrust against the bottom (13) of the rail giving the possibility of heightening the tenons (6a, 6b, 6c, 6d) engaged in the groove (15) and of flattening the heads (9a, 9b, 9c, 9d) against a lower face (14b) of the upper side (14), **characterized in that** the actuation device (17) further comprises means (26) for returning the stud (10) configured for automatically inserting the stud into a passage aperture (16) when the stud and the passage aperture coincide, **in that** the actuation device (17) comprises a first manipulation handle (18) and a transmission mechanism (19) laid out between the first manipulation handle and the stud (10) so that the actuation of the first manipulation handle allows translation of the stud from its retracted position to its active position and vice versa, **in that** the first manipulation handle (18) includes a sole (28) configured for allowing the actuation of said first manipulation handle with a foot, **in that** said assembly includes a second anchoring system (1) provided with a second manipulation handle (18), and **in that** the first and second manipulation handles (18, 18') are connected together to the rear of the armchair with the sole (28), which gives the possibility of acting concomitantly on the first and second manipulation handles.

2. The assembly according to claim 1, **characterized in that** the return means include a spring (26) compressively mounted inside a chamber made in a supporting part (22) attached to the support.

3. The assembly according to claim 2, **characterized in that** the first manipulation handle is pivotally mounted on the supporting part (22).

4. The assembly (1, 2) according to any one of claims 1 to 3, wherein the stud (10) is slidably and connectibly mounted (L1) on the support (5) along a vertical axis (X), the first manipulation handle (18) is pivotally and connectibly mounted on the support along a first horizontal pivot axis (23) and perpendicular to the vertical axis (X) and, a connecting rod is pivotally and connectibly mounted with the first manipulation handle (18) along a second horizontal pivot axis (25) parallel and shifted on a first side of the vertical axis (X) and downwards with respect to the first pivot axis (23) on the one hand and with the stud (10) along a third horizontal pivot axis (24) perpendicular to the vertical axis (X), parallel to the first pivot axis (23) and shifted downwards with respect to the second pivot axis (25).

5. The assembly (1, 2) according to claim 4, wherein the stud (10) begins to abut against the bottom (13) of the rail (2) when the first manipulation handle (18) is actuated downwards and when the second pivot axis (25) is slightly shifted on the first side with respect to the vertical axis (X).

6. The assembly (1, 2) according to claim 5, wherein abutment means (18c, 22b) are laid out between the first manipulation handle (18) and the support (5) for blocking the pivoting of said first manipulation handle during swinging of the second pivot axis (25) from the first side to a second side of the vertical axis (X).

7. The assembly (1, 2) according to any one of claims 1 to 6, wherein the actuation device (17) comprises a safety mechanism giving the possibility of blocking the stud (10) in its active position.

8. The assembly (1, 2) according to any one of claims 1 to 7, wherein the stud (10) comprises a main body (11) configured so as to be inserted into a passage aperture (16) and to abut against the groove (15), and, a nipple (12) laid out at a lower end of the main body (11) and configured so as to slide in the groove (15).

9. A vehicle including a floor (4) and at least one seat, at least one assembly according to any one of claims 1 to 8, being laid out between the floor (4) and the seat, the rail (2) being attached onto the floor (4) and the first and second anchoring systems (1) being attached to the seat, by means of a chassis (3).
